Europäisches Patentamt

European Patent Office

Office européen des brevets

(11) Publication number: **0 091 532**
A1

(12) **EUROPEAN PATENT APPLICATION**

(21) Application number: 82810222.8

(22) Date of filing: 24.05.82

(51) Int. Cl.³: **C 10 L 5/40**
C 05 F 9/04, C 05 F 9/00

(30) Priority: 08.04.82 CH 2181/82

(43) Date of publication of application:
19.10.83 Bulletin 83/42

(84) Designated Contracting States:
AT BE DE FR GB IT LU NL SE

(71) Applicant: LIGI S.A.
Via Cantonale 16
CH-6900 Lugano(CH)

(72) Inventor: Sousa, Didio
Via C. Lalocezia
Panama(PA)

(74) Representative: Baggiolini, Raimondo et al,
Racheli & Fiammenghi Via San Gottardo 15
CH-6900 Lugano(CH)

(54) **Process for the production of fuel from waste and recovery of the remaining materials.**

(57) The process under consideration provides for the treatment of solid municipal waste and waste of other origin without any preliminary crushing so as to obtain a fuel of high calorific power which would be an "alternative" to coal, diesel oil and other costly fuels. For this purpose, the uncrushed solid waste is treated with organic waste, such as sludge, sewage, slaughter offal, manure and agricultural waste, food industry refuse, etc. in order to cause fermentation, which converts the readily biodegradable materials of low calorific power into fertilizer, while the materials that are not readily degradable or not degradable at all and have a high calorific power remain unchanged and can be separated out, for example, by sifting, following removal of the remaining valuable substances, such as glass, metals and plastics.

Process for the scientific utilization of solid municipal waste and waste of other origin for the production of an alternative fuel of high energy value and the recovery of the remaining materials.

The present invention relates to a process for the scientific utilization of solid municipal waste and waste of other origin, which makes it possible to obtain fuels of high calorific value, that is, alternative fuels to present-day costly fuels, such as coal, diesel oil, etc. Furthermore, through a series of mechanical and manual retrievals - the latter under unobjectionable hygienic conditions - other valuable materials are obtained, such as: fertilizers, glass, ferrous scrap, metals, plastics, soil for plant nurseries, that is, products that are useful for industry and agriculture.

Present-day waste recovery plants are essentially divided into two major types:
- composting plants
- recycling plants.

Composting plants are designed to recover the organic portion contained in solid municipal waste for the purpose of converting it into organic fertilizers (compost).
The usual processing in these plants consists of an initial crushing of the incoming waste, subsequent sifting, and introduction of the finer portion into fixed or mobile plants where the waste undergoes accelerated fermentation or digestion. The drawbacks of such plants, by now universally recognized, are as follows:
a) the presence of a high percentage of stones, glass, plastics, metals, etc. in the compost produced due to the fact that, following the preliminary crushing, it is no longer possible to perform an appropriate separation of the organic portion to be made into fertilizer;
b) the poor fermentation and quality of the compost produced, due to the fact that the accelerated fermentation is generally insufficient to convert the fresh organic residues into humic materials; the fermentation occurs at any rate, causing only the destruction of the organic matter and does not build up the humic substances required by farmland;

c) the low percentage of waste recovered. Actually, except for ferrous metals, in these plants there is no significant recovery of other raw materials;

d) normally, only solid municipal waste is used and, at the utmost, sludge. Furthermore, the use of the latter generally involves the introduction of a considerable amount of heavy metals into the fertilizer, spoiling it for agricultural purposes.

Recycling plants are now being developed in an attempt to recover, by means of highly sophisticated industrial processes, the main raw materials contained in the waste, such as paper and cardboard, glass, metals and plastics, in addition to the organic matter. The technologies developed thus far are highly sophisticated and consume a great deal of energy and money. These plants generally give priority to the recovery of paper and cardboard, so that the subsequent recoveries occur by working on the refuse from previous processing which are incompatible, for example, with the recovery of organic substances. This is due to the fact that in this case, too, the materials sent in for retrieval undergo thorough crushing.

The shortcomings of these plants are:

a) the extremely high cost of their construction and operation, which make them usable only in cities with a population of at least 350-400,000 inhabitants in highly industrialized countries;

b) the production of extremely poor quality compost containing much foreign matter, because it is obtained from a retrieved performed after processes leading to the recovery of paper, plastics and ferrous metal;

c) the still rather low percentage of water.

The process embodying the teachings of this invention, unlike the known processes described above, calls for subjecting incoming solid waste, without preliminary shredding or grinding, to a microbacterial fermentation, which makes it possible to convert into fertilizer the substances consisting of the perishable organic portion and, in part, of the cellulose materials such as paper and cardboard, as well as those of high calorific power, such as plastics, rubber, wood, wool, leather, rags and similar materials. This fermentation, again according to this invention, is preferably obtained by adding to the incoming solid waste slaughter offal, manure, crop and animal husbandry residues, refuse from food processing, sawdust, wood chips, cesspool drainage, and similar substances.

It goes without saying that a preliminary check is performed to determine the quantity and quality of the material to be added to obtain good fermentation. Also added is a fully fermenting substrate which has been previously inocculated with appropriate microbe-enzyme substances capable of improving the degradation of the initial organic substances.

Therefore, in addition to solid municipal waste, this process also utilizers waste from other crop growing and animal husbandry and industrial operations, which it would otherwise be difficult to dispose of.

The fermentation preferably takes place in heaps and lasts from 70 to 100 days, depending on the waste used and the weather. Aerobic fermentation produces heat, causing a rise in temperature, which becomes stabilized at 45-55° C for the entire duration of the process.

After fermentation, which refines, that is, reduces the particle size of biodegradable materials, a mechanical separation is performed, for example, by sifting, and the residues passing through the sieve are further processed in order to produce a high-quality fertilizer, whereas what is left on the sieve is mechanically retrieved by operators who work under perfectly hygienic conditions, since the treated material is now free of pathogenic organisms. Thus, valuable alternative fuels are obtained, that is, fuels capable of replacing coal, diesel oil and similar fuels, because of their high calorific value; and, separately, glass, plastics, ferrous metals, other metals, etc.

Accordingly, the process according to this invention is set forth in the characterizing portion of Claim 1.

For the process under consideration, let it be pointed out that solid municipal waste includes the following commodity categories:

1) Biodegradable materials which can be divided into two main subcategories:

1a) relatively non-perishable organic materials, such as paper and cardboard. This subcategory is of some importance for producing alternative fuels in accordance with this invention, since it has a calorific value ranging on the average around 13,000-14,000 kj/kg;

1b) perishable organic materials consisting of garbage and miscellaneous organic residues.
Because of its extremely high moisture content, this subcategory is unsuitable for the production of an alternative fuel and, therefore, must be separated from those materials which are suitable for the intended purpose of the invention.

2) Vitreous materials:
These materials must be separated out and possibly recovered for reuse, an appropriate separation system being envisaged for this purpose.

3) Ferrous metals:

If possible, they must be recovered for recycling, magnets and electromagnets being provided for this purpose.

4) Nonferrous metals:

They must also be separated out and, if possible, recovered for recycling by manual retrieval.

5) Plastics:

They include various compounds, such as polyethylene present in the overwhelming majority of cases, polypropylene, polystyrene, polyvinyl chloride and others still present in trace quantities only. They have an extremely high calorific value, which can be estimated to average 40,000 to 45,000 kj/kg and, therefore, can be advantageously used for the production of an alternative fuel.

6) Rubber-based materials:

They have a rather high calorific value ranging around 25,000 to 30,000 kj/kg.

7) Wood- and leather-based materials:

They can be included in the same commodity category, because their properties are rather similar, as is their biodegradarion, possible for both materials, although rather slow.

8) Rag- and wool-based materials:

Depending on their composition (cotton, wool, rayon, linen ard silk), they show little or no biodegradability, but instead have a high calorific value, estimated to average 15.000 to 25,000 kj/kg.

9) Miscellaneous inert materials:

These include stones, pieces of ceramic, porcelain, concrete, etc.

From the characteristics of the above described waste, it appears that it is necessary, first of all, to separate out from the waste certain commodity categories extraneous to the preparation of alternative fuels. In the same order as they were described, these categories are: perishable organic materials, glass, ferrous and nonferrous metals, and inert materials.

Taking account of the criteria set forth above, it is deemed necessary that these separations take place with a minimum expenditure of money and energy and, at the same time, that the commodity categories separated out be capable of constituting finished or semifinished industrial products.

Perishable organic materials, which usually constitute a rather high percentage of solid municipal waste, can be converted into fertilizer, and it is useful and necessary also to use part of the paper materials basically composed of cellulose for this purpose. The possibility of separating these organic portions from the rest is due to the fact that they are readily biodegradable and can thus be easily comminuted. This can be done by causing solid municipal waste to ferment as such, that is, without initial crushing. The microbial organisms effecting biodegradation of the organic materials will attack the large organic molecules, breaking them down into easily perishable materials. On the other hand, the non-biodegradable or slowly biodegradable materials, such as wood, rubber, leather, rags and part of the paper and cardboard will remain practically intact and therefore it will be possible subsequently to separate them out by means of simple sifting devices.

Therefore, the various stages of the process according to this invention are as follows:

Stages of the process:

Stage I: Controlled fermentation of the waste in order to obtain the separation of the easily perishable organic portion subsequently to be used in the production of fertilizers.

This stage must result in a refining of the easily biodegradable materials without involving the materials useful for the production of fuel and those that are useless for that purpose but not to be included in the portion that is to be made into fertilizer.

For the success of this first stage, it is necessary that:

a) the waste not be crushed, but left whole, and put through a bag-breaking machine only when polyethylene bags are used in waste collection.

b) As a result of the considerable differences between the particle sizes of the various organic materials found in the waste, it is advisable, especially in industrialized countries where a less perishable portion is present, to add to municipal waste other organic-based waste available in the district in which the plant operates. The use of other waste at this stage of the process is of considerable importance, not only because the addition of solely organic materials to the waste improves the conversion stages and the resultant organic unprocessed product, but also because it solves the disposal problems of the agribusinesses discarding them.

In this stage I, therefore, solid municipal waste as such is mixed with locally available organic waste. The mixing must take into account the basic principles of composting, according to which the average moisture content of the heaps must range between 40 and 60%, so that the ensuing fermentations may be of an aerobic nature. Furthermore, it is necessary that a certain amount of oxygen be present inside the heaps, because the aerobic organisms which effect such conversions consume oxygen in amounts approximately 0.1 - 0.2 grams of oxygen per gram of oxidized organic substance.
Another parameter of basic importance in this fermentation
is the C/N ratio between the carbon and nitrogen present
in the organic materials.

On the average, this ratio must be kept to a level of 25-30
to enable the biochemical conversion process to take place
at a sufficiently rapid rate. The fermentation conditions
envisaged are necessary to provide adequate oxygenation and
a moisture content enabling aerobic fermentation which will
refine the organic substance in a short time without producing bad odors. Anaerobic fermentation which may take place
in case there is not enough oxygen or the moisture content
exceeds 70% would produce bad odors due to the production of
such compounds as indole, skatol, mercaptan or methane originating from this particular fermentation.

On the other hand, aerobic fermentation, in addition to not
producing bad odors and demolishing biodegradable organic materials quickly produces a certain amount of thermal energy,
which causes a rise in the temperature of the fermentation
heaps. On the average, the temperature reaches levels ranging
from 45 to 55°C, sufficient to destroy any pathogenic germs,
larvae, miscellaneous seeds, at least over the time periods
of about 70 days envisaged for this fermentation and, at any
rate, may vary to a moderate extent depending on the seasonable and climatic patterns of the area in which the operation
takes place. Furthermore, for the purpose of improving and
accelerating the development of such aerobic fermentation, it
is useful also to add to the miscellaneous waste mixed for
fermentation an already fully fermenting substrate previously
activated by means of appropriate microbe strains and enzyme
substances.

Stage I ends when the easily biodegradable substances have
been refined to a particle size under approximately 50 mm in diameter.

The fermentation heaps may vary in size, depending on the characteristics of the waste used, considering the above-described moisture content and oxygenation conditions.

In order to maintain the above conditions, it is almost always necessary to operate by turning the heap over once or several times for better mixing of the various components of this heap and introducing oxygen.

Stage II: Mechanical separation of the easily biodegradable organic component and subsequent separation of the recoverable raw materials.

This second stage begins when the easily biodegradable organic portion found in the composting heaps has been refined to the point where it shows particle sizes under 50 mm in diameter.

At this time, the materials in the composting heap are introduced into a sifting plant pierced with 50-mm holes, which allows passage of constituent materials under this size, discarding larger ones. In this way, the organic portion is successfully separated from the remaining commodity categories, which proceed along the industrial processing line, enabling the recovery of ferrous metals using electromagnets. The recovery of vitreous materials and aluminum takes place through a system of conveyor belts in a cascade and sloping arrangement, which causes the still largely intact vitreous articles (bottles) to tumble one after the other very easily in comparison to other materials owing to their mainly cylindrical shape.

At this point, it is possible to recover large pieces of polyethylene for manual introduction into a plant for subsequent cutting up, washing, drying and packaging.

The raw material thus recovered can easily be used by any polyethylene regeneration plant. Manual picking out is necessary because the recycling of this material is possible only if it is absolutely pure. This can only be determined by hand.

This type of recovery, however, though certainly warranted from the economic point of view, is justified only in those cases where there are local polyethylene regenerating plants.

In any case, only the portion made up of large-size pieces - usually in a relatively low percentage - can be recovered. Manual intervention, which is also necessary at this stage to complete the retrieval of glass, aluminum, lead and any other foreign matter, such as mattresses or other articles is, however, hygienically safe, since the worker is retrieving from a belt which moves at a low speed carrying plastics, rags, wood, inert materials, rubber leather remnants and little else. These materials come out of a cycle of aerobic fermentations in which they were subjected for about 70 days to temperatures ranging from 45 to 55°C - more than enough to guarantee the absolute innocuousness of these materials, as well as the complete absence of bad odors.

Stage III: Production of alternative fuel.

The commodity categories remaining after the various mechanical and manual operations performed during the second stage of the process are composed of:
a) miscellaneous plastics
b) rags and wool
c) cardboard and paper
d) rubber, leather, wood
e) inert materials
f) organic matter.

At this stage of the process, the amount of these commodity categories present, as compared to the initial quantity, is as follows:

a) almost all for plastics, except for some of the polyethylene, if this material is recovered;

b) almost all for rags and wool, since the first stage of fermentation took place rapidly and relatively unaggressively, and was therefore such that it would convert and refine these materials only to an extremely limited extent;

c) relatively little for paper and cardboard, because these materials are involved in fermentation that took place during the first stage, and are converted to a considerable extent into fine materials which are useful for the subsequent production of high-quality organic fertilizer. The reason is that paper and cardboard are materials having neither a very high nor a very low calorific value. Therefore, they can also be utilized for fuel production.

Since not a negligible portion of solid municipal waste consists of perishable organic materials, however, it is well to recover this portion in order to subject it to further processing leading to the production of high-quality fertilizers. From this standpoint, it is also useful that the paper materials - basically made of cellulose - become a part of the raw materials to be converted into fertilizer together with the other organic waste originating from agriculture and industry. Therefore, in this process the more readily degradable paper materials enter the fermentation process, whereas the larger or plasticized materials, such as, for example, milk or beverage containers, whose degradation is consequently more difficult, do not enter the fermentation process but instead go with the materials used for the production of an alternative fuel. This is an extremely positive feature, since the less readily biodegradable paper residues are those that have a higher calorific value and are therefore rightly includes in the commodity categories used for the production of fuel;

d) almost all for rubber, wood and leather, because the fermentation processes only marginally involved these materials;

e) almost all for inert materials;

f) in an extremely low percentage, because the perishable organic matter present at this point is composed of the finer portion of semifinished products to be made into fertilizer which, having an average moisture content of 40-50%, and being, as stated above, very fine, has remained attached to the various materials described thus far. For the production of a high-quality alternative fuel it is necessary:
1) to comminute the various materials present;
2) to discard the inert materials; and
3) to eliminate the organic matter present.

It is possible to accomplish these three objectives by a rough initial crushing of the materials present so far, followed by a pneumatic separation capable of dividing the portions of high specific gravity (inert matter) from those of lower specific gravity. Following this separation, the material has to be subjected to a second grinding in a mill with a vertical axis capable of reducing the residual materials to a particle size of, for instance, a postage stamp. At the end of this step, it is necessary to sift the material through holes having a diameter of 3 mm and then 20-25 mm.

The discarded material has to be recycled to another mill in order to be reduced to the particle size envisaged for the alternative fuel, which will have a range between 3 and 20-25 mm.

In this way, not only the inert portion which may be used as subgrade for public squares or roads is removed from this material, but also the organic powder with dimensions less than 3 mm, which still clings to the various materials and has properties such that it can be regarded as a semifinished industrial product readily usable for the production of soil for floriculture and plant nurseries. The separation of this material is very important because it contains a large part of the moisture and ashes still present. This alternative fuel may be used in industrial plants, such as cement works, electric power plants, continuous kilns for bricks and still other applications, either alone or combined with other conventional fuels, such as coal, fuel oil diesel oil.

Characteristics of the semifinished industrial product made with the process of the invention usable for the production of organic fertilizers:

| | |
|---|---|
| Moisture content | 40-50% |
| Organic matter | 35-40% |
| C/N | 18-25% |
| Total nitrogen | 1.5% |
| Total phosphorus | 1.2% |
| Total potassium | 0.9% |
| Total calcium | 4.5% |
| pH | 7-7.3 |
| Specific weight | 700-750 $kg/m^3$ |

Characteristics of the raw semifinished product made with the process of the invention usable for soil preparation:

| | |
|---|---|
| Moisture content | 35-40% |
| Organic matter | 40-45% |
| C/N | 20-25% |
| Total nitrogen | 1.5-2% |
| Total phosphorus | 1-1.5% |
| Total potassium | 1-1.5% |
| Total calcium | 2% |

| pH | 6.8-7 |
|---|---|
| Specific weight | 500-550 kg/m$^3$ |
| Presence of extraneous matter such as glass, stones | none |
| Fineness | under 3 mm |

Characteristics of the alternative fuel produced with the process of the invention:

| Particle size ranging from | 3 to 20-25 mm |
|---|---|
| Average calorific value | 23,000 kj/kg |
| Moisture content | under 20% |
| Ashes | 15% average |
| Carbon | 55-60% |
| Hydrogen | 7/9% |

It is necessary to recall that solid municipal waste as such has an average calorific value of approximately 6,000 to 6,500 kj/kg, a moisture content of approximately 40% and an ash content exceeding 30%.

Two applications of the process under consideration will be described below with reference to two very different countries with municipal wastes having completely different compositions.

Example 1 - A European Industrialized Country

Solid municipal waste is composed, on the average, of 40% paper and cardboard, 20% perishable materials, 12% ashes and powders, 3% rags, 8% ferrous and nonferrous metals, 9% glass, 5% plastics, 3% unclassified materials, combustible and non-combustible. In such cases, except for ashes, powders, metals and glass which are separated out in the various processing steps, there remains a percentage of materials largely usable for the production of fuel, composed of paper and cardboard, rags, plastics and unclassifiable materials (50%). Even though the

paper and cardboard will be partially converted into material usable as fertilizer, there still remains a very high percentage of materials to be made into fuel. In this case, too, there is readily available other organic waste to be used in the initial fermentation, composed of slaughter offal, manure agricultural residues, food industry refuse, saw-dust, wood chips, cesspool sludge. All these materials, depending on their physicochemical and biological properties, are mixed with the solid municipal waste in a manner such as to maintain a sufficient ventilation of the mass, a C/N ratio of 25-30 and a moisture content of under 70%. The fermentation of the materials thus accumulated and integrated with a parent substrate inoculated with a microbe-and-enzyme mixture proceeds for a period of time lasting approximately between 50 and 100 days, preferably 70 days, so that the readily biodegradable portions of the materials are refined until they reach a particle size under 50 mm in diameter. Then comes the mechanical sifting of these materials in order to separate the fines from the coarse portions.

At this point, a microbe-and-enzyme humification mixture is added to the fine part along with bone or mineral phosphates, and this portion is allowed to ferment in heaps placed in sheds until further manipulation of the product, which will subsequently be resifted down to very fine particle size (under 10 mm), and then bagged. On the other hand, the materials discarded from the first sifting are passed under a device that picks out iron, a cascade-arranged plant for the collection of glass and, finally, to a preliminary crushing followed by a ballistic separation of the inert materials, to a second crushing, and then to a separation of the powdery portion from the portion with a diameter exceeding 20-25 mm. Fertilizing substances and peaty materials may be added to the powdery portion to convert it into high-quality soil for plant nurseries.

Example II  - A South American Country

Example of a South American developing country in the form of a city with a subtropical climate and a population of 255,000 inhabitants. In this case, the composition of solid municipal waste is approximately 48% perishable organic residues, 37% non-perishable residues, and 15% inert materials and ashes. Furthermore, organic residues are present in considerable amounts, originating both from wood processing, such as sawdust, wood chips, etc. or from sugar cane processing, such as "bagasse" and "vinasse". Relatively large quantities of residues are also produced by rice processing, such as chaff, etc., in addition to several other industrial and commercial wastes. Solid municipal waste is characterized by a high percentage of perishable organic matter of little interest for fuel production and by a comparatively high content of non-perishable residues, including the portion usable for the production of fuel consisting basically of paper, cardboard, plastics, rubber, etc.

In this case, a mixture is made of solid municipal waste very rich in perishable organic matter and other organic waste allowing the initial production of the semi-finished product to be made into fertilizer, with the exception of chaff, which is relatively non-perishable and has high calorific value.

The alternative fuel will be composed of the material discarded  in the first mechanical sifting operation from which in another step iron and vitreous materials, bulky articles, aluminum and lead will be removed. It then undergoes a first crushing, a pneumatic separation, a secondary crushing, and a sifting leading to the separation of the portion under 3 mm in size, usable as soil for plant nurseries, and then reduction to an optimum particle size for this type of fuel.

## Claims

1. A process for the scientific utilization of solid municipal waste and waste of other origin for the production of an alternative high-energy fuel and the recovery of the remaining materials, characterized by the following steps:

a) Mixing in with the various types of waste as they arrive, that is, without crushing and taking into account their physicochemical and biological properties, additives capable of quickly inducing the biochemical conversion, particularly fermentation, of highly perishable substances of low calorific power contained therein;

b) Biochemical conversion, particularly through fermentation, preferably in heaps with substrates capable of facilitating the same;

c) Separation from other substances by sifting, ventilating or equivalent means, of the highly perishable organic portion which has undergone biochemical conversion;

d) Addition to the organic portion which has undergone the biochemical conversion referred to in subparagraph c) of a microbe-enzyme substrate with high humification capability so as to turn it into fertilizer;

e) Automatic or, where this is not possible, manual, retrieval of the portion remaining after the separation referred to in subparagraph c) so as to separate out the magnetic materials (iron, nickel), glass, non-magnetic metals, plastics and inert materials and especially to separate them from materials of high calorific power, such as those made of rubber, wood, leather, rags, and wool, which constitute the basis for the preparation of the alternative fuel;

f) Comminution of materials of high calorific power referred to under subparagraph e) and subsequent treatment to separate therefrom the portions of highest calorific power for the production of an alternative fuel to coal and diesel oil for industrial and heating processes.

2. The process as set forth in Claim 1, characterized in that in stage a) the additives capable of quickly inducing biochemical conversion, particularly by fermentation consist of organic waste available locally, such as: slaughter offal, manure, agricultural residues, food industry refuse, sawdust, wood chips, cesspool sludge, sewage.

3. The process as set forth in Claim 1, characterized in that in stage b) adequate ventilation of the mass, a 25 to 30 ratio between carbon and nitrogen, and a moisture content under 70% but over 30% are maintained.

4. The process as set forth in Claims 1 and 3, characterized in that the substrates referred to under step b) of Claim 1 consist of a microbe-enzyme mixture and the conversion time, preferably ranging between 70 and 100 days, is such as to reduce the readily biodegradable materials down to a particle size under 40-50 mm in diameter.

5. The process as set forth in Claim 1, characterized in that bone or mineral phosphates are added to the fertilizer referred to under subparagraph d) and the whole is allowed to ferment in heap under sheds, up to the ripening of the product, which is then sifted down to a particle size of under 10 mm, and subsequently bagged.

6. The process as set forth in Claim 1, characterized in that in stage e) ferrous materials are retrieved by means of magnets or electromagnets, whereas glass (particularly bottles which can tumble)is separated out by inclined belt conveyors in a cascade arrangement.

7. The process as set forth in Claim 1, characterized in that in stage e) inert materials are separated out in a pneumatic plant following preliminary crushing of residues after the recovery of the organic portion, glass, iron , aluminum and polyethylene; after a second crushing of the materials still remaining after removal of the inert materials, the powdery portion, still rich in organic substances, to which fertilizing substances and peaty materials are added, can be converted into soil for plant nurseries; the remainder, consisting of materials with higher calorific power, is sized and possibly dried and pelleted for use as an alternative fuel.

8. Product obtained with the process of the invention as set forth in Claims 1 through 7, consisting in particular of alternative fuels to coal, diesel oil and similar fuels, fertilizers, glass, ferrous products, metals, plastics, soil for plant nurseries, products for industry and agriculture.

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 150 245 (CAUVIN) * Claims 1,4; page 20, lines 18-25 * | 1,2 | C 10 L 5/40 C 05 F 9/04 C 05 F 9/00 |
| A | FR-A-1 248 249 (DELATTRE) * Abstract * | 1 | |
| A | GB-A- 974 047 (BINNS) * Claim 1 * | 1 | |
| A | GB-A-1 551 020 (REFUSE DERIVED FUELS) * Claims 1-6 * | 1 | |
| A | DE-A-2 148 766 (BOYER) * Claims 1,6,7 * | 1 | |

TECHNICAL FIELDS SEARCHED (Int. Cl. ³)

C 10 L
C 05 F

The present search report has been drawn up for all claims

| Place of search THE HAGUE | Date of completion of the search 09-06-1983 | Examiner MEERTENS J. |
|---|---|---|